# EUROPEAN PATENT APPLICATION

(11) **EP 4 475 238 A1**
(43) Date of publication of application: **11.12.2024**
(21) Application number: 22924813.3
(22) Date of filing: 03.02.2022
(51) Int. Cl.: H01M 8/12, H01M 8/1213, C25B 9/00

(54) **ELECTROCHEMICAL CELL**

(71) Applicant: NISSAN MOTOR CO., LTD., Kanagawa 221-0023 (JP)
(72) Inventor: MIYOSHI, Yutaro, Atsugi-shi, Kanagawa 243-0123 (JP)
(74) Representative: Grünecker Patent- und Rechtsanwälte PartG mbB
(86) International application number: PCT/JP2022/004329
(87) International publication number: WO 2023/148903

(57) **Abstract**

The present invention provides an electrochemical cell wherein: a pair of electrodes are connected by the intermediary of a solid electrolyte; and at least one of the electrodes is supported by a metal support. The solid electrolyte is configured as a dense ion conductive layer; at least one of the electrodes is configured as a porous ion conductive layer that has oxygen ion conductivity; and the metal support is configured as a porous electron conductive layer that supports the porous ion conductive layer. In addition, a porous oxidation prevention layer is arranged between the porous ion conductive layer and the porous electron conductive layer; and a catalyst material is loaded such that the porous ion conductive layer, the porous oxidation prevention layer and the porous electron conductive layer are connected.

## Description

### TECHNICAL FIELD

The present disclosure relates to an electrochemical cell.

### BACKGROUND ART

In an electrochemical cell with solid electrolyte such as a solid oxide fuel cell (SOFC) or a solid oxide electrolyte cell (SOEC), when a metal support is provided to support an electrode (air electrode) exposed to an oxidizing atmosphere, the air electrode and the surrounding metal support are likely to be degraded oxidatively. For this reason, mechanical strength may decrease and cause damage to the cell.

A solid oxide fuel cell having a metal support layer supporting a cathode (air electrode) layer is disclosed in Japanese Patent Publication No. JP2009-59697A. This solid oxide fuel cell prevents oxidative degradation between the cathode layer and the metal support layer by forming a barrier layer on the surfaces of the cathode layer and the metal support layer.

### SUMMARY OF INVENTION

In the solid oxide fuel cell described in JP2009-59697A, the barrier layer is formed by laminating precursor of the cathode layer and the metal support layer and impregnating a barrier material. Therefore, the barrier layer cannot be formed on a bonding interface between the cathode layer and the metal support layer. For this reason, when oxygen ions are conducted from the cathode layer to the metal support layer, oxidative degradation on the bonding interface between the cathode layer and the metal support layer is promoted. As a result, there is a risk of peeling or cracking of the cathode layer and the metal support layer on the bonding interface, thereby resulting in damage to the cell.

The present disclosure is designed to solve the technical problems described above, and the object of the present disclosure is to provide an electrochemical cell that can prevent damage to the cell caused by oxidative degradation.

According to one aspect of the present disclosure, an electrochemical cell is provided in which a pair of electrodes is connected via a solid electrolyte and a metal support supports at least one electrode. The solid electrolyte is configured as a dense ion conducting layer, at least one of the electrodes is configured as a porous ion conducting layer having oxygen-ion conductivity, and the metal support is configured as a porous electron conducting layer that supports the porous ion conducting layer. Additionally, a porous anti-oxidation layer is disposed between the porous ion conducting layer and the porous electron conducting layer, and a catalyst material is supported so as to connect the porous ion conducting layer, the porous anti-oxidation layer, and the porous electron conducting layer.

### BRIEF DESCRIPTION OF DRAWINGS

FIG. 1 is a schematic configuration diagram of an electrochemical cell according to one embodiment of the present disclosure.
FIG. 2 is an enlarged view of a porous anti-oxidation layer.
FIG. 3 is an exemplary view for explaining the conduction of electrons and oxygen ions in a porous electron conducting layer, a porous anti-oxidation layer, and a porous ion conducting layer.

### DESCRIPTION OF EMBODIMENTS

Hereinafter, embodiments of the present disclosure will be described with reference to the drawings and the like.

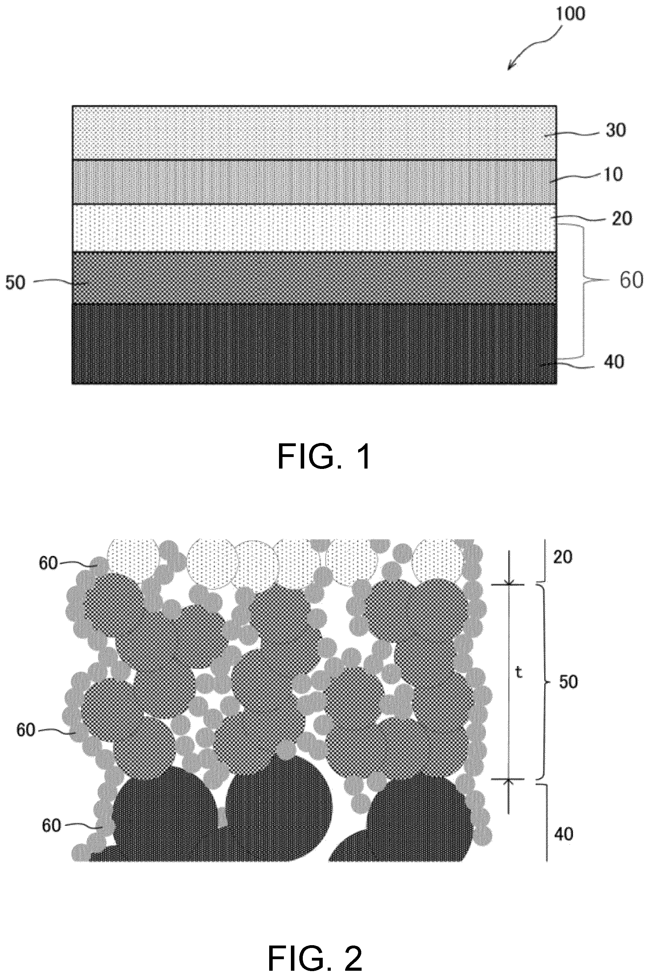

FIG. 1 is a schematic configuration diagram of an electrochemical cell 100 according to one embodiment of the present disclosure. In the electrochemical cell 100, a pair of electrodes 20, 30 is connected to each other through a solid electrolyte 10. Further, in the present embodiment, the electrochemical cell 100 is described as a solid oxide fuel cell (SOFC) that extracts electricity from air (oxygen) and fuel (hydrogen), but it is not limited thereto. For example, the electrochemical cell 100 may be a solid oxide electrolyzer cell (SOEC) that uses electricity to electrolyze water to produce oxygen and hydrogen. Furthermore, the electrochemical cell 100 of the present embodiment is mainly mounted on a vehicle or the like, but it is not limited thereto.

As shown in FIG. 1, the electrochemical cell 100 comprises the solid electrolyte 10, the pair of electrodes 20, 30 connected through the solid electrolyte 10, a metal support 40 installed to support the electrode 20 on one side, and an anti-oxidation layer 50 disposed between the electrode 20 and the metal support 40. Further, a catalyst material 60 is supported in the electrochemical cell 100.

The solid electrolyte 10 is configured as a dense ion conducting layer formed of an oxide having oxygen-ion conductivity (hereinafter, a solid electrolyte 10 is also referred to as a dense ion conducting layer 10), and is sandwiched between and supported by the pair of electrodes 20, 30. Examples of this oxide include yttria-stabilized zirconia (YSZ), scandia-stabilized zirconia (SSZ), samarium-doped ceria (SDC), gadolinium-doped ceria (GDC), lanthanum strontium gallate magnesite (LSGM), and the like, but is not limited thereto.

The electrode 20 is an oxidant electrode (air electrode, cathode electrode) exposed to an oxygen atmosphere, and is configured as a porous ion conducting layer having oxygen-ion conductivity (hereinafter, the electrode 20 is also referred to as the porous ion conducting layer 20). The porous ion conducting layer 20 is disposed to contact one side of the dense ion conducting layer 10. Materials that configure the porous ion conducting layer 20 may include oxides made of lanthanum, strontium, manganese, cobalt, zirconium, cerium, and the like, but are not limited thereto. In the porous ion conducting layer 20, a reduction reaction occurs which reduces oxygen in cathode gas (air).

The electrode 30 is a fuel electrode (anode electrode) and is configured by a porous material. The electrode 30 may be formed, for example, from cermet material which is a mixture of a noble metal material with a catalytic function such as nickel and yttria-stabilized zirconia (YSZ) and the like, but is not limited thereto. Further, the electrode 30 is disposed so that it contacts the other side of the dense ion conducting layer 10. In the electrode 30, oxide ions conducted from the dense ion conducting layer 10 cause an oxidation reaction which oxidizes anode gas containing hydrogen, and the like. The electrochemical cell 100 generates power based on electrode reactions at the cathode electrode (electrode 20) and the anode electrode (electrode 30). In addition, if the electrochemical cell 100 is a solid oxide electrolyzer cell (SOEC), electricity is supplied to the electrochemical cell 100 to electrolyze water to extract hydrogen (fuel) from the electrode 30 (fuel electrode) and oxygen from the electrode 20 (air electrode).

The metal support 40 is disposed to contact one side of the anti-oxidation layer 50, which will be described later, and supports the porous ion conducting layer 20 and the anti-oxidation layer 50. In other words, the metal support 40 functions as a structural member to reinforce the strength of the electrochemical cell 100. Further, the metal support 40 is configured as a porous electron conducting layer having electron conductivity (hereinafter, the metal support 40 is also referred to as the porous electron conducting layer 40). The specific materials that configure the porous electron conducting layer 40 may include metals such as stainless steel, iron, and nickel, but are not limited thereto.

The anti-oxidation layer 50 is a porous member to prevent oxidation of the porous ion conducting layer 20 and the porous electron conducting layer 40, and is disposed between the porous ion conducting layer 20 and the porous electron conducting layer 40 to isolate the porous ion conducting layer 20 from the porous electron conducting layer 40 (hereinafter, the anti-oxidation layer 50 is also referred to as a porous anti-oxidation layer 50). The porous anti-oxidation layer 50 is formed of a material with no oxygen-ion conductivity or has lower oxygen-ion conductivity than the other layers (the dense ion conducting layer 10, the porous ion conducting layer 20, the electrode 30, and the porous electron conducting layer 40). As a result, conduction of oxygen ions in the porous ion conducting layer 20 to the porous electron conducting layer 40 is suppressed. Further, details of the anti-oxidation layer 50 will be described later.

The catalyst material 60 plays a catalyst role in the reduction reaction of oxygen and may be selected from, but is not limited to, metals such as, for example, platinum, ruthenium, iridium, rhodium, palladium, osmium, tungsten, lead, iron, copper, silver, chromium, cobalt, nickel, manganese, vanadium, molybdenum, gallium, aluminum, and alloys thereof. Further, the catalyst material 60 is electronically conductive and is supported to connect the porous electron conducting layer 40, the anti-oxidation layer 50, and the porous ion conducting layer 20.

In the electrochemical cell 100 configured as described above, electrons supplied from the porous electron conducting layer 40 side are supplied to the porous ion conducting layer 20 via the catalyst material 60, such that oxygen is reduced in the porous ion conducting layer 20.

However, in the electrochemical cell including a solid electrolyte such as the solid oxide fuel cell (SOFC) or the solid oxide electrolytic cell (SOEC), the electrode (air electrode) exposed to an oxidizing atmosphere and the metal support supporting the electrode are likely to be degraded oxidatively. In particular, if oxygen ions are conducted from the air electrode to the metal support, oxidative degradation at a bonding interface of the air electrode and the metal support may be promoted, and there is a risk of peeling or cracking of the air electrode and the metal support layer on the bonding interface, thereby resulting in damage to the cell.

In contrast, in the present embodiment, the anti-oxidation layer 50 is disposed between the porous ion conducting layer 20 (air electrode) and the porous electron conducting layer 40 (metal support), and the porous ion conducting layer 20 (air electrode) and the porous electron conducting layer 40 (metal support) are isolated. As a result, conduction of oxygen ions in the porous ion conducting layer 20 to the porous electron conducting layer 40 is suppressed. Thereby, oxidative degradation is suppressed at the bonding interface between the porous ion conducting layer 20 (air electrode) and the porous electron conducting layer 40 (metal support), and peeling or cracking on the bonding interface of the porous ion conducting layer 20 (air electrode) and the porous electron conducting layer 40 (metal support) is prevented. That is, damage to the electrochemical cell 100 from oxidative degradation is prevented.

Hereinafter, details of the porous anti-oxidation layer 50 will be described.

FIG. 2 is an enlarged view of the porous anti-oxidation layer 50.

The porous anti-oxidation layer 50 is prepared, for example, by mixing raw material particles and a binder. As shown in FIG. 2, the porous anti-oxidation layer 50 contains a catalyst material 60 having electronic conductivity to be connected to the porous electron conducting layer 40 and the porous ion conducting layer 20.

One side of the porous anti-oxidation layer 50 is sintered to the porous ion conducting layer 20 and the other side of the porous anti-oxidation layer 50 is sintered to the porous electron conducting layer 40, so that the porous anti-oxidation layer 50 is disposed between the porous ion conducting layer 20 and the porous electron conducting layer 40.

As described above, the porous anti-oxidation layer 50 is formed of a material with no oxygen-ion conductivity or has lower oxygen-ion conductivity than the other layers (the dense ion conducting layer 10, the porous ion conducting layer 20, the electrode 30, and the porous electron conducting layer 40). In particular, for example, it is formed by zirconia (doped zirconia) doped with 3 mol% or less of yttria as an additive material. By keeping the concentration of the additive material below 3 mol%, oxygen-ion conductivity can be kept low while maintaining sufficient strength.

More specifically, the porous anti-oxidation layer 50 contains a material with zero oxygen-ion conductivity or with oxygen-ion conductivity lower than that of other layers, in the amount of 70% or more at the interface connected to the porous ion conducting layer 20. For example, the porous anti-oxidation layer 50 contains a material, in the amount of 70% or more, formed by zirconia (doped zirconia) doped with 3 mol% or less of yttria as an additive material, at the interface connected to the porous ion conducting layer 20. This can further interfere with the oxygen ions in the porous ion conducting layer 20 from diffusing toward the porous anti-oxidation layer 50, and further prevent the oxygen ions from conducting to the porous electron conducting layer 40 and causing the porous electron conducting layer 40 to be degraded oxidatively. Further, other materials may be used in areas other than the interface with the porous ion conducting layer 20, increasing the freedom of material selection.

Further, the porous anti-oxidation layer 50 includes a metal component of the same type (e.g., zirconium, cerium, etc.) as the material composing the porous ion conducting layer 20, and is configured such that the difference between the thermal expansion coefficient of the material composing the porous anti-oxidation layer 50 and the thermal expansion coefficient of the material composing the porous ion conducting layer 20 is 20% or less. By keeping the thermal expansion coefficient difference at 20% or less, it is possible to prevent peeling of both layers when sintering the porous anti-oxidation layer 50 and the porous ion conducting layer 20. Further, sintering strength of both layers is increased by the porous anti-oxidation layer 50 including a metal component of the same type as the porous ion conducting layer 20.

More specifically, at the interface connected to the porous ion conducting layer 20, the porous anti-oxidation layer 50 is configured to include a material having the thermal expansion coefficient difference of 20% or less with respect to the material composing the porous ion conducting layer 20 and including a metal component of the same type as the material composing the porous ion conducting layer 20, in the amount of 70% or more. As a result, when sintering, peeling of the porous anti-oxidation layer 50 and the porous ion conducting layer 20 can be prevented, and the sintering strength of both layers can be increased. At the same time, other materials can be used in areas other than the interface with the porous ion conducting layer 20, increasing the freedom of material selection.

Further, the porous anti-oxidation layer 50 is configured to include a metal material. As a result, bonding strength is increased because a bond between the porous anti-oxidation layer 50 and the porous electron conducting layer 40 (metal support) becomes a metal-to-metal bond.

More specifically, the porous anti-oxidation layer 50 is configured such that the metal material ratio at the interface connecting to the porous electron conducting layer 40 is 30% or more. By configuring the the metal material ratio at the interface with the porous electron conducting layer 40 to 30% or more, the bonding strength between the porous anti-oxidation layer 50 and the porous electron conducting layer 40 is further increased. Further, the the metal material ratio may be reduced in areas other than the interface with the porous electron conducting layer 40 to decrease oxygen-ion conductivity.

Further, the metal material used within the porous anti-oxidation layer 50 may be, for example, stainless steel (SUS containing aluminum) containing 2 to 6 wt% of aluminum Al. By using aluminum, the oxidation resistance of the metals in the porous anti-oxidation layer 50 can be increased, thus preventing degradation of the porous anti-oxidation layer 50.

Next, the porous anti-oxidation layer 50 is configured such that the thickness (t) is 50% or more with respect to an average particle diameter of the metal particles included in the porous electron conducting layer 40. If the thickness (t) of the porous anti-oxidation layer 50 is less than 50% of the average particle diameter of the metal particles included in the porous electron conducting layer 40, there is a risk that the porous electron conducting layer 40 may penetrate the porous anti-oxidation layer 50 and connect with the porous ion conducting layer 20 during production of the electrochemical cell 100. If the porous electron conducting layer 40 is in contact with the porous ion conducting layer 20, the interface of the porous electron conducting layer 40 and the porous ion conducting layer 20 is oxidatively degraded, increasing the risk of damage to the electrochemical cell 100. Therefore, in the present embodiment, the porous anti-oxidation layer 50 is configured such that the thickness (t) is 50% or more with respect to the average particle diameter of the metal particles included in the porous electron conducting layer 40 to prevent the porous electron conducting layer 40 from penetrating the porous anti-oxidation layer 50 and connecting with the porous ion conducting layer 20 during production of the electrochemical cell 100. Further, FIG. 2 is an exemplary view of the porous anti-oxidation layer 50, and the thickness (t) of the porous anti-oxidation layer 50 is shown to be significantly greater than it actually is, with respect to the particle diameter of the metal particles included in the porous electron conducting layer 40.

As described above, near the interface connecting with the porous ion conducting layer 20, the porous anti-oxidation layer 50 is configured by a material having affinity for the porous ion conducting layer 20 and preventing conduction of oxygen ions. The porous anti-oxidation layer 50 is configur ed by material having affinity for the porous electron conducting layer 40 near the interface connecting with the porous electron conducting layer 40. Further, the porous anti-oxidation layer 50 is configured to have a thickness of which the porous electron conducting layer 40 does not penetrate the porous anti-oxidation layer 50 when the electrochemical cell 100 is produced.

Further, a method of changing the proportion of each material near the interface may include for example, producing the porous anti-oxidation layer 50 by dividing it into a plurality of layers having different material proportions and bonding the plurality of layers, but is not limited thereto.

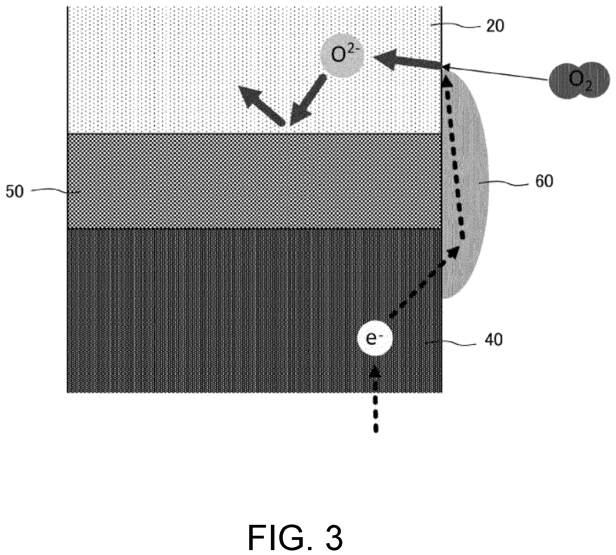

FIG. 3 is an exemplary view for explaining the conduction of electrons and oxygen ions in the porous electron conducting layer 40, the porous anti-oxidation layer 50, and the porous ion conducting layer 20.

As shown in FIG. 3, the porous ion conducting layer 20, the porous anti-oxidation layer 50, and the porous electron conducting layer 40 contains an electronically conductive catalyst material 60 to connect the three layers. Therefore, when electrons are supplied to the porous electron conducting layer 40 side from a circuit or the like, the electrons are conducted from the porous electron conducting layer 40 having electronic conductivity to the catalyst material 60, and the electrons are supplied to the catalyst material 60, the porous ion conducting layer 20, and a three phase boundary exposed to air. That is, the electrons supplied from the porous electron conducting layer 40 side are conducted to the porous ion conducting layer 20 without interfering with the porous anti-oxidation layer 50.

Further, when the electrons are supplied to the porous ion conducting layer 20, the catalyst material 60, and the three phase boundary exposed to air, oxygen in the air (cathode gas) is reduced at the three phase boundary to become oxygen ions.

Here, the porous anti-oxidation layer 50 which interferes the conduction of oxygen ions, is disposed between the porous electron conducting layer 40 and the porous ion conducting layer 20 to isolate the porous electron conducting layer 40 and the porous ion conducting layer 20. As a result, the oxygen ions in the porous ion conducting layer 20 are only conducted toward the dense ion conducting layer 10 (see FIG. 1) side and not toward the porous electron conducting layer 40. Thus, the oxidative degradation of the bonding interface of the porous ion conducting layer 20 and the porous electron conducting layer 40 according to the conduction of oxygen ions is suppressed.

Further, to prevent oxidation of the porous electron conducting layer 40 and the porous ion conducting layer 20 by oxygen in the air, a barrier layer may be formed on the surface of the porous electron conducting layer 40 and the porous ion conducting layer 20 with a material having oxygen-ion conductivity and electron conductivity. The barrier layer may be formed by impregnating the barrier material to the porous electron conducting layer 40 and the porous ion conducting layer 20.

According to the electrochemical cell 100 of the aforementioned embodiment, the following effects can be obtained.

The electrochemical cell 100 includes the porous anti-oxidation layer 50 disposed between the porous ion conducting layer 20 and the porous electron conducting layer 40 (metal support), and the catalyst material 60 is contained so as to connect the porous ion conducting layer 20, the porous anti-oxidation layer 50, and the porous electron conducting layer 40. As such, by forming the porous anti-oxidation layer 50, conduction of oxygen ions in the porous ion conducting layer 20 to the porous electron conducting layer 40 is suppressed. Therefore, oxidative degradation is suppressed at the bonding interface of the porous ion conducting layer 20 and the porous electron conducting layer 40, and peeling or cracking on the bonding interface of the porous ion conducting layer 20 and the porous electron conducting layer 40 is prevented. That is, damage to the electrochemical cell 100 from oxidative degradation is prevented.

Further, since the catalyst material 60 is supported to connect the porous ion conducting layer 20, the porous anti-oxidation layer 50, and the porous electron conducting layer 40, electrons supplied from the porous electron conducting layer 40 side can be conducted to the porous ion conducting layer 20 without interfering with the porous anti-oxidation layer 50.

The electrochemical cell 100 includes the air electrode of which the porous ion conducting layer 20 is exposed under an oxidizing atmosphere, and the porous anti-oxidation layer 50 disposed between the porous ion conducting layer 20 (air electrode) and the porous electron conducting layer 40 (metal support). In this way, by forming the porous anti-oxidation layer 50 on the air electrode side where a risk of oxidative degradation is high, damage to the electrochemical cell 100 from oxidative degradation can be prevented effectively.

The porous anti-oxidation layer 50 of the electrochemical cell 100 is configured by a material with zero oxygen-ion conductivity or with oxygen-ion conductivity lower than that of other layers. This can further interfere with the oxygen ions in the porous ion conducting layer 20 from diffusing toward the porous electron conducting layer 40, and oxidative degradation on the bonding interface of the porous ion conducting layer 20 and the porous electron conducting layer 40 can be further prevented.

The porous anti-oxidation layer 50 of the electrochemical cell 100 is configured by doped zirconia doped with 3 mol% or less of yttria as an additive material. As a result, the oxygen-ion conductivity of the porous anti-oxidation layer 50 can be kept low while maintaining the strength of the porous anti-oxidation layer 50.

The porous anti-oxidation layer 50 of the electrochemical cell 100 contains 70% or more of a material with zero oxygen-ion conductivity or with oxygen-ion conductivity lower than that of other layers, at the interface connected to the porous ion conducting layer 20. This can further interfere with the oxygen ions in the porous ion conducting layer 20 from diffusing toward the porous anti-oxidation layer 50, and oxidative degradation on the bonding interface of the porous ion conducting layer 20 and the porous electron conducting layer 40 can be further prevented. Further, other materials may be used in areas other than the interface with the porous ion conducting layer 20, increasing the freedom of material selection.

At the interface connecting to the porous ion conducting layer 20, the porous anti-oxidation layer 50 of the electrochemical cell 100 contains 70% or more of the material formed by zirconia (doped zirconia) doped with 3 mol% or less of yttria as an additive material. As a result, this can further interfere with the oxygen ions in the porous ion conducting layer 20 from diffusing toward the porous anti-oxidation layer 50 while maintaining the strength of the porous anti-oxidation layer 50.

In the electrochemical cell 100, the thermal expansion coefficient difference between the material composing the porous anti-oxidation layer 50 and the material composing the porous ion conducting layer 20 is 20% or less. In this way, by configuring the porous anti-oxidation layer 50 with the material having the thermal expansion coefficient difference of 20% or less with respect to the material composing the porous ion conducting layer 20, it is possible to prevent peeling of both layers when sintering the porous anti-oxidation layer 50 and the porous ion conducting layer 20.

The porous anti-oxidation layer 50 of the electrochemical cell 100 includes a metal component of the same type as the material composing the porous ion conducting layer 20. As a result, the sintering strength of the porous anti-oxidation layer 50 and the porous ion conducting layer 20 is increased, and peeling of the porous anti-oxidation layer 50 and the porous ion conducting layer 20 is prevented.

At the interface connected to the porous ion conducting layer 20, the porous anti-oxidation layer 50 of the electrochemical cell 100 comprises the material having the thermal expansion coefficient difference of 20% or less with respect to the material composing the porous ion conducting layer 20 and including a metal component of the same type as the material composing the porous ion conducting layer 20, in the concentration of 70% or more. As a result, when sintering, peeling of the porous anti-oxidation layer 50 and the porous ion conducting layer 20 can be prevented, and the sintering strength of both layers can be improved. At the same time, other materials can be used in areas other than the interface with the porous ion conducting layer 20, increasing the freedom of material selection.

The porous anti-oxidation layer 50 of the electrochemical cell 100 includes a metal material. As a result, bonding strength is increased because a bond between the porous anti-oxidation layer 50 and the porous electron conducting layer 40 (metal support) becomes a metal-to-metal bond. Therefore, peeling of the porous anti-oxidation layer 50 and the porous electron conducting layer 40 is prevented.

The electrochemical cell 100 is configured such that the metal material ratio at the interface connecting the porous anti-oxidation layer 50 and the porous electron conducting layer 40 is 30% or more. As a result, the bonding strength of the porous anti-oxidation layer 50 and the porous electron conducting layer 40 is further increased. Further, the metal material ratio may be reduced in areas other than at the interface between the porous anti-oxidation layer 50 and the porous electron conducting layer 40 to decrease oxygen-ion conductivity.

In the electrochemical cell 100, the porous anti-oxidation layer 50 includes the metal material containing 2 to 6 wt% aluminum. As a result, the oxidation resistance of the metals in the porous anti-oxidation layer 50 can be increased, thus preventing degradation of the porous anti-oxidation layer 50.

In the electrochemical cell 100, thickness (t) of the porous anti-oxidation layer 50 is 50% or more with respect to the average particle diameter of the metal particles composing the porous electron conducting layer 40. As a result, during production of the electrochemical cell 100, the porous electron conducting layer 40 is prevented from penetrating the porous anti-oxidation layer 50 and connecting with the porous ion conducting layer 20.

Further, in the present embodiment, the porous ion conducting layer 20 is configured as the air electrode, and the porous anti-oxidation layer 50 is provided on the air electrode side, but it is not necessarily limited thereto. That is, a configuration may be used in which the porous electron conducting layer (metal support) having electron conductivity is disposed on the fuel electrode (electrode 30) side, and the porous anti-oxidation layer is disposed between the electrode 30 and the porous electron conducting layer. For example, when a vehicle equipped with the electrochemical cell 100 is stopped, there is a risk of oxygen flowing into the fuel electrode, so there is a possibility of oxidative degradation on the fuel electrode side as well. However, by forming the porous anti-oxidation layer on the air electrode side, damage to the electrochemical cell 100 from the oxidative degradation can be prevented.

Further, in the present embodiment, the porous anti-oxidation layer 50 may be configured by a material with zero oxygen-ion conductivity or with oxygen-ion conductivity lower than that of other layers, but it is not limited thereto. For example, it is also possible to configure only a portion of the porous anti-oxidation layer 50 by a material having no oxygen-ion conductivity or lower than that of the other layers, while the other portion may be configured by a material having oxygen-ion conductivity equivalent to the other layers. In this case as well, conduction of oxygen ions can be interfered, and oxidative degradation on the bonding interface between the porous ion conducting layer 20 and the porous electron conducting layer 40 is suppressed. In addition, the entire porous anti-oxidation layer 50 may be configured by the material having oxygen-ion conductivity equivalent to that of the other layers. Even in this case, compared to the case of directly bonding the porous ion conducting layer 20 and the porous electron conducting layer 40, conduction of oxygen ions from the porous ion conducting layer 20 to the porous electron conducting layer 40 can be suppressed.

In addition, the specific materials, percentages, thermal expansion coefficient, thickness of the porous anti-oxidation layer 50, and the like composing the porous anti-oxidation layer 50 shown in the present embodiment, are preferred forms and are not necessarily limited thereto. That is, the porous anti-oxidation layer 50 may have any configuration as long as it can suppress the conduction of oxygen ions from the porous ion conducting layer 20 to the porous electron conducting layer 40.

Embodiments of the present disclosure were described above, but the above embodiments are merely examples of applications of this disclosure, and the technical scope of this disclosure is not limited to the specific configurations of the above embodiments.

## Claims

1. An electrochemical cell, wherein a pair of electrodes are connected via a solid electrolyte and at least one electrode is supported by a metal support,
the solid electrolyte is configured as a dense ion conducting layer,
at least one of the electrodes is configured as a porous ion conducting layer having oxygen-ion conductivity,
the metal support is configured as a porous electron conducting layer that supports the porous ion conducting layer,
a porous anti-oxidation layer is disposed between the porous ion conducting layer and the porous electron conducting layer, and
a catalyst material is supported so as to connect the porous ion conducting layer, the porous anti-oxidation layer, and the porous electron conducting layer.

2. The electrochemical cell of claim 1, wherein the porous ion conducting layer is configured as an air electrode exposed under an oxidizing atmosphere.

3. The electrochemical cell of claims 1 or 2, wherein the porous anti-oxidation layer is configured by a material with zero oxygen-ion conductivity or with oxygen-ion conductivity lower than that of other layers.

4. The electrochemical cell of any one of claims 1 to 3, wherein the porous anti-oxidation layer is configured by doped zirconia with 3 mol% or less of yttria added.

5. The electrochemical cell of any one of claims 1 to 4, wherein at an interface connected with the porous ion conducting layer, the porous anti-oxidation layer contains a material with zero oxygen-ion conductivity or with oxygen-ion conductivity lower than that of other layers, in an amount of 70% or more.

6. The electrochemical cell of any one of claims 1 to 5, wherein at an interface connecting with the porous ion conducting layer, the porous anti-oxidation layer contains a material consisting of doped zirconia with 3 mol% or less of yttria added, in an amount of 70% or more.

7. The electrochemical cell of any one of claims 1 to 6, wherein thermal expansion coefficient difference between a material composing the porous anti-oxidation layer and a material composing the porous ion conducting layer is 20% or less.

8. The electrochemical cell of any one of claims 1 to 7, wherein a material composing the porous anti-oxidation layer comprises a metal component of the same type as a material composing the porous ion conducting layer.

9. The electrochemical cell of any one of claims 1 to 8, wherein at an interface connecting with the porous ion conducting layer, the porous anti-oxidation layer contains a material which has a thermal expansion coefficient difference of 20% or less with respect to a material composing the porous ion conducting layer and contains a metal component of the same type as a material composing the porous ion conducting layer, in an amount of 70% or more.

10. The electrochemical cell of any one of claims 1 to 9, wherein the porous anti-oxidation layer comprises a metal material.

11. The electrochemical cell of any one of claims 1 to 10, wherein the porous anti-oxidation layer has a metal material content of 30% or more at an interface connecting with the porous electron conducting layer.

12. The electrochemical cell of any one of claims 1 to 11, wherein the porous anti-oxidation layer comprises a metal material containing 2 to 6 wt% of aluminum.

13. The electrochemical cell of any one of claims 1 to 12, wherein a thickness of the porous anti-oxidation layer is 50% or more with respect to an average particle diameter of metal particles constituting the porous electron conducting layer.
